Europäisches Patentamt

European Patent Office

Office européen des brevets

(19)

(11) Veröffentlichungsnummer: **0 083 691**
**B1**

(12) **EUROPÄISCHE PATENTSCHRIFT**

(45) Veröffentlichungstag der Patentschrift:
19.06.85

(51) Int. Cl.⁴: **B 23 B 31/14**

(21) Anmeldenummer: **82109110.5**

(22) Anmeldetag: **02.10.82**

(54) Kraftbetätigtes Spannfutter für Drehmaschinen.

(30) Priorität: **09.12.81 DE 3148661**

(43) Veröffentlichungstag der Anmeldung:
**20.07.83 Patentblatt 83/29**

(45) Bekanntmachung des Hinweises auf die Patenterteilung:
**19.06.85 Patentblatt 85/25**

(84) Benannte Vertragsstaaten:
**DE FR GB IT SE**

(56) Entgegenhaltungen:
**DE - A - 2 132 130**
**DE - B - 2 556 227**
**DE - U - 7 613 635**
**GB - A - 1 541 011**

**Patent Abstracts of Japan, Band 6, Nr. 48, 27. März 1982**

(73) Patentinhaber: **SMW Schneider & Weisshaupt GmbH, Wiesentalstrasse 28, D-7996 Meckenbeuren (DE)**

(72) Erfinder: **Hiestand, Karl, Mühlweg 2, D-7798 Pfullendorf (DE)**

(74) Vertreter: **Engelhardt, Guido, Dipl.-Ing., Montafonstrasse 35 Postfach 1350, D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein kraftbetätigtes Spannfutter für Drehmaschinen mit radial verstellbaren Grund- und Spannbacken, die mittels im Futterkörper tangential zu dessen Drehachse in Aufnahmetaschen geführter Keilstangen antreibbar sind, wobei die Keilstangen gemeinsam durch ein axial verschiebbares über Keilflächen oder dgl. mit diesen zusammenwirkendes Verstellglied betätigbar sind und mit Zahnleisten in eine Verzahnung der Backen eingreifen.

Ein Spannfutter dieser Art, das sich in der Praxis außerordentlich gut bewährt hat, ist durch die DE-AS 2 556 227 bekannt. Obwohl dieses Spannfutter nur aus wenigen Teilen besteht und somit störunempfindlich und wirtschaftlich zu fertigen ist, hat es sich doch gezeigt, daß insbesondere bei der Verwendung auf numerisch gesteuerten Werkzeugmaschinen bei hohen Drehzahlen die nach innen gerichtete Spannkraft reduziert wird, da dieser die von den Backen hervorgerufenen nach außen gerichteten Zentrifugalkräfte entgegenwirken bzw. sich die Kräfte bei einer Innenspannung und somit bei nach außen gerichteten Spannkräften addieren, da ein Fliehkraftausgleich nicht vorgesehen ist.

Des weiteren sind hydraulisch betätigte Keilhakenfutter bekannt, bei denen ein Fliehkraftausgleich vorgesehen ist. Ein Fliehkraftausgleich dieser Art ist durch die DE-A-2 132 130 bekannt. Dazu dienen im Futterkörper geführte Ausgleichselemente als Gegengewichte, die über ebenfalls im Futterkörper abgestützte Gelenkhebel mit den Backen trieblich verbunden sind. Abgesehen davon, daß derartige Spannfutter in axialer Richtung groß bauen, ist hierbei vor allem von Nachteil, daß die auf ein eingespanntes Werkstück einwirkende statischen Spannkräfte vor und nach einem Bearbeitungsvorgang mitunter sehr unterschiedlich sind. Bei einem Umlauf des Spannfutters wird nämlich die von dem Verstellglied auf die Backen übertragene Spannkraft durch die von diesen hervorgerufene Zentrifugalkraft nahezu ausgeglichen, in diesem Betriebszustand wird somit die Spannkraft von den Ausgleichselementen erzeugt, die über die Umlenkhebel mit den Backen verbunden sind. Das über die Keilflächen mit den Backen gekoppelte Verstellglied ist demnach entlastet, so daß dieses durch die weiterhin auf dieses einwirkende Kraft, wenn auch nur geringfügig, verstellt wird. Beim Stillsetzen des Spannfutters werden aber dessen Backen, da das auf das Stellglied einwirkende Druckmittel inkompressibel ist, in dieser Lage festgehalten, so daß gegenüber der ersten Einspannung nunmehr eine höhere Spannkraft auf das Werkstück ausgeübt wird. Dies führt, da der Spannkraftanstieg erheblich sein kann, oftmals zu einer Verformung des eingespannten Werkstückes und auch des Futterkörpers.

Es ist daher Aufgabe der Erfindung, ein kraftbetätigtes Spannfutter für Drehmaschinen der vorgenannten Art zu schaffen, dessen Backen mittels eines axial verschiebbaren Verstellgliedes betätigbar sind und das bei geringer axialer Baulänge und hoher Betriebssicherheit nicht nur für hohe Spannkräfte geeignet ist, sondern bei dem mit einfachen Mitteln auch die von den Backen hervorgerufenen Zentrifugalkräfte vollständig, und zwar ohne daß das Verstellglied hierbei entlastet wird, auszugleichen sind. Vor allem soll erreicht werden, daß eine Erhöhung der statischen Spannkraft nach einem Bearbeitungsvorgang nicht eintritt. Des weiteren soll der Bauaufwand, um dies zu bewerkstelligen, gering gehalten werden.

Gemäß der Erfindung wird dies bei einem Kraftspannfutter der eingangs genannten Art dadurch erreicht, daß den Aufnahmetaschen der Keilstangen jeweils eine in den Futterkörper oder einen mit diesem verbundenen Abschlußdeckel eingearbeitete Freisparung zugeordnet ist, daß die Keilstangen mit einem in die Freisparung ragenden in radialer Richtung freiliegendem Fliehgewicht versehen sind und daß der Futterkörper und/oder die Keilstangen jeweils ein Kipplager aufweisen, an denen die Keilstangen oder die Fliehgewichte abgestützt sind und mittels denen die bei Rotation des Futterkörpers auftretende Zentrifugalkraft eines Fliehgewichtes in eine auf die zugeordnete Keilstange im Bereich der Zahnleisten radial nach innen gerichtete Kraft umlenkbar ist.

Die Freisparungen sollten hierbei, um möglichst große Fliehgewichte in diesen unterbringen zu können, sich jeweils etwa über die Hälfte der axialen Länge der Aufnahmetaschen der Keilstangen erstrecken und deren Außenkontor sollte der Außenmantelfläche des Futterkörpers angepaßt, vorzugsweise parallel zu dieser verlaufend, ausgebildet sein.

Das Fliehgewicht kann als unmittelbar an einer Keilstange als radial nach außen gerichteter Vorsprung angeformt sein, es kann aber auch in Achsrichtung der Keilstange verstellbar mit dieser verbunden werden, so daß auf einfache Weise gegebenenfalls Anpassungen an unterschiedliche Backengrößen oder andere Betriebsbedingungen vorzunehmen sind.

Zur verstellbaren Halterung des Fliegewichtes ist dieses zweckmäßigerweise mittels eines angeformten Steges in einer in die Keilstange eingearbeiteten, beispielsweise T-förmig ausgebildeten Längsnut zu führen und zur Verstellung kann im Futterkörper ein sich parallel zu dessen Drehachse erstreckender drehbar gelagerter Bolzen vorgesehen werden, der auf seiner der Freisparung zugekehrten Stirnfläche einen in diese ragenden exzentrisch angeordneten Zapfen aufweist, der in eine in das Fliehgewicht eingearbeitete nach außen gerichtete Mitnahmenut eingreift. Außerdem sollten bei dieser Ausgestaltung die Keilstangen zur Unterbringung eines möglichst großen Fliehgewichtes im Bereich der dieses aufnehmenden Längsnut abgestuft ausgebildet sein.

Das den Keilstangen jeweils zugeordnete Kipplager kann in einfacher Ausgestaltung durch den vorzugsweise abgerundeten Übergang der Freisparung in die Aufnahmetaschen oder durch eine in die Keilstangen eingearbeitete, zu der das Fliehgewicht aufnehmenden Freisparung hin offenen und in die Aufnahmetasche ragenden Aussparung gebildet werden. Angebracht ist es hierbei, das Kipplager einer Keilstange in einem durch die Breite der zugeordneten Kolbennase des Verstellgliedes bestimmten Bereich, vorzugsweise mittig zu dieser anzuordnen.

Nach einer andersartigen Ausgestaltung ist es aber auch möglich, das Fliehgewicht mit einem sich in Richtung der Keilstange erstreckenden, vorzugsweise abgesetzten Ansatz zu versehen, mittels dem dieses einseitig auf einem im Futterkörper parallel zu dessen Drehachse gehaltenen Bolzen als Kipplager schwenkbar gelagert und an der Keilstange im Bereich der Zahnleisten, vorzgusweise über eine Nase, an dieser abgestützt ist. Auch hierbei sollte der Bolzen in einem durch die Breite der zugeordneten Kolbennase des Verstellgliedes bestimmten Bereich, vorzugsweise mittig zu dieser in dem Futterkörper eingesetzt und die Keilstange sollte an dem dem Fliehgewicht zugekehrten Ende stufenförmig ausgebildet sein.

Um die dem Fliehgewicht entgegengerichtete Kraft zu reduzieren, ist es angebracht, in die Keilstangen in dem dem zugeordneten Fliehgewicht gegenüberliegenden Bereich eine oder mehrere Freisparungen einzuarbeiten.

Des weiteren kann, um einem Verklemmen der Backenverzahnungen in den Zahnleisten entgegenzuwirken, deren Verzahnung in dem dem Kipplager abgewandten Bereich, vorzugsweise bis zur Backenmitte freigespart werden. Auch werden dadurch die Hebelverhältnisse der auf eine Keilstange einwirkenden Kraft günstig beeinflußt.

Nach einer andersartigen Ausführungsform können die die Fliehgewichte aufnehmenden Freisparungen auch auf der den Zahnleisten der Keilstangen gegenüberliegenden Seite in den Futterkörper und/oder den Abschlußdeckel eingearbeitet werden.

Bei dieser Ausgestaltung ist es angebracht, die Kipplager jeweils durch eine an der nach außen gerichteten Fläche einer Keilstange und/oder an der nach innen gerichteten Fläche einer Aufnahmetasche angearbeiteten, sich in Achsrichtung des Futterkörpers erstreckenden, vorzugsweise keilförmig ausgebildeten Aussparung zu bilden, so daß die Fliehgewichte unmittelbar axial hinter den Keilstangen angeordnet sind.

Zweckmäßig ist es hierbei des weiteren, die Fliehgewichte als Ringsegmente zu gestalten, die mit radialem Spiel in die Freisparung eingesetzt und über einen in eine Nut eingreifenden Ansatz, z. B. in Form eines Bolzens, an der den Zahnleisten gegenüberliegenden Seite mit den Keilstangen verbunden sind, wobei die Fliehgewichte in radialer Richtung federnd, beispielsweise durch in diese eingesetzte und sich an dem Abschlußdeckel abstützenden Druckfedern gehalten sind. Außerdem sollten die Fliehgewichte verdrehfest, beispielsweise mittels eines oder mehrerer achsparallel angeordneter und in diese oder den Futterkörper oder den Abschlußdeckel eingesetzter, mit ihrem freien Ende in radial gerichteten Nuten eingreifende Führungsbolzen gehalten sein.

Aus fertigungstechnischen Gründen ist es des weiteren vorteilhaft, die die Fliehgewichte aufnehmende Freisparung als in den Abschlußdekkel eingearbeitete Ringnut auszubilden und in Umfangsrichtung zwischen den einzelnen Fliehgewichten ringsegmentartige Distanzstücke anzuordnen.

Zur Erhöhung der Zentrifugalkraft des Fliehwichtes kann dieses mit einer Einlage aus Schwermetall versehen sein.

Vorteilhaft ist es ferner, das Fliehgewicht in seiner Masse und die Abstände der Kraftresultierenden zu dem Kipplager derart zu bemessen, daß in einem bestimmten Drehzahlbereich des Spannfutters die von einem Backen hervorgerufene Zentrifugalkraft der von der Zentrifugalkraft des Fliehgewichtes auf die Keilstange im Bereich der Zahnleisten ausgeübten Kraft entspricht.

Bei einem Kraftspannfutter mit einem auf der Rückseite durch einen Deckel verschließbaren Futterkörper ist es des weiteren angebracht, um einer Verformung des Futterkörpers entgegenzuwirken, diesen im Bereich der Kipplager durch einen an dem Deckel angeformten Bund, durch in den Deckel eingesetzte Bolzen, durch Schrauben oder dgl. in radialer Richtung abzustützen.

Das gemäß der Erfindung ausgebildete Kraftspannfutter zeichnet sich nicht nur durch einen geringen Bauaufwand und eine hohe Zuverlässigkeit und Formstabilität aus, sondern vor allem dadurch, daß die von den Backen hervorgerufene Zentrifugalkraft jeweils selbsttätig ausgeglichen wird, ohne daß dabei das Verstellglied entlastet wird und ohne daß somit eine Erhöhung der statischen Spannkraft nach einem Bearbeitungsvorgang eintritt. Werden nämlich den Keilstangen in Freisparungen des Futterkörpers ragende Fliehgewichte zugeordnet und werden im Futterkörper und/oder an den Keilstangen des weiteren Kipplager vorgesehen, an denen die Keilstangen oder die Fliehgewichte abgestützt sind, so werden mit einfachen Mitteln die von den Fliehgewichten hervorgerufenen Zentrifugalkräfte auf die Keilstangen übertragen, und zwar auf deren mit den Zahnleisten versehenen Teile. Eine Entlastung des Verstellgliedes tritt dabei nicht ein, so daß dieses seine Stellung beibehält und die statische Spannkraft demnach nicht erhöht wird.

Durch die erfindungsgemäße Ausgestaltung werden somit die von den Backen hervorgerufenen Zentrifugalkräfte ausgeglichen, ohne daß die Keilstangen eine Axialbewegung ausführen. Diese werden vielmehr in radialer Richtung um ein Kipplager geringfügig verschwenkt. Diese Schwenkbewegung ist möglich, da die Keilstangen mit geringfügigem Spiel in den Aufnahmetaschen des Futterkörpers geführt bzw. freigespart sind und sich bei einer Außenspannung eines Werkstückes an den äußeren Führungsflächen der Aufnahmetaschen anlegen. Auch gleicht sich die Keilstange der Elastizität des Futterkörpers an, so daß Verformungen sowohl des eingespannten Werkstückes als auch des Futterkörpers zuverlässig ausgeschlossen sind. Die Spannkraft bleibt vielmehr bei wechselnden Drehzahlen wie auch bei Stillstand des Spannfutters stets konstant.

In der Zeichnung sind einige Ausführungsbeispiele eines gemäß der Erfindung ausgebildeten Kraftspannfutters dargestellt und nachfolgend im einzelnen erläutert. Hierbei zeigt

Fig. 1 das mittels eines Verstellgliedes betätigbare Kraftspannfutter im Längsschnitt,

Fig. 2 das Kraftspannfutter nach Fig. 1 in einem Schnitt nach der Linie II-II der Fig. 1 mit einem an der Keilstange angeformten Fliehgewicht,

Fig. 3 das Kraftspannfutter nach Fig. 2 mit einem verstellbar an der Keilstange angebrachten Fliehgewicht,

Fig. 4 das Kraftspannfutter nach Fig. 2 mit einer andersartigen Abstützung des der Keilstange zugeordneten Fliehgewichtes,

Fig. 5 eine andersartige Ausführungsform des Kraftspannfutters nach Fig. 1 und

Fig. 6 das Kraftspannfutter nach Fig. 5 in Vorderansicht.

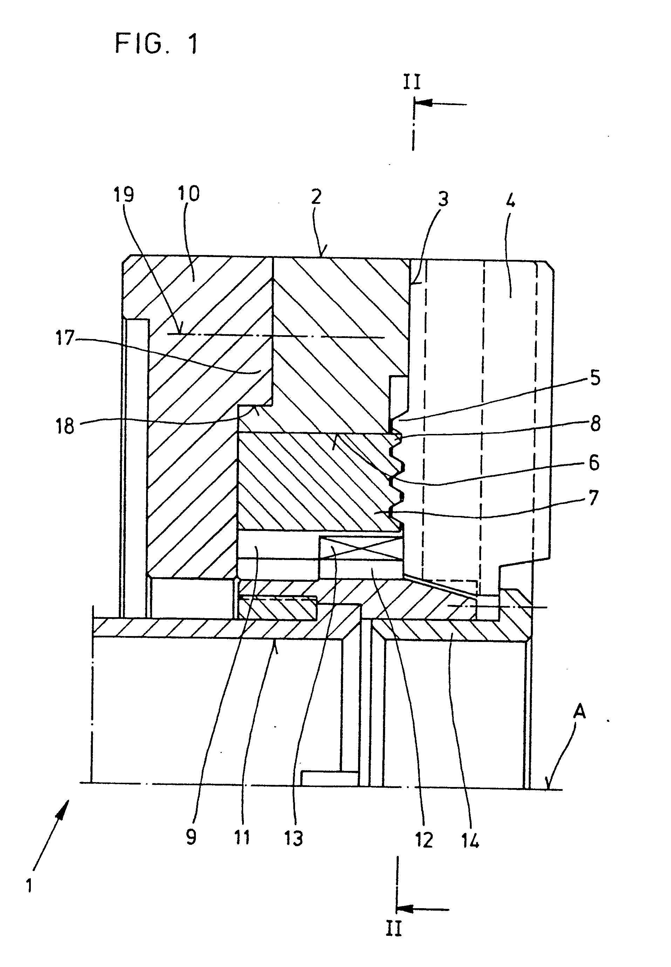

Das in Fig. 1 dargestellte und mit 1 bezeichnete Kraftspannfutter weist in einem Futterkörper 2 in radial gerichteten Nuten 3 verschiebbar geführte Spann- oder Grundbacken 4 auf, die mittels tangential zur Drehachse A des Spannfutters 1 verstellbare Keilstangen 7 betätigbar sind. Dazu sind in Aufnahmetaschen 6 des Futterkörpers 2 angeordnete Keilstangen 7 vorgesehen, die auf der Vorderseite mit Zahnleisten 8 ausgestattet sind, die in eine an den Backen 4 auf deren Rückseite angebrachte Verzahnung 5 eingreifen, und auf der nach innen gerichteten Seite der Keilstangen 7 ist jeweils eine Schrägfläche 9 vorgesehen, die mit einer an einer Kolbennase 12 eines in den Futterkörper 2 ragenden Verstellgliedes 11 angeformten Keilfläche 13 zusammenwirkt. Durch einen Deckel 10, der mittels Schrauben 16 an dem Futterkörper 2 angeschraubt ist, ist dieser rückseitig verschlossen. Außerdem ist in den Futterkörper 2 eine mit diesem verschraubte Büchse 14 eingesetzt.

Um die Backen 4 des Spannfutters 1, das mittels Schrauben 15 an einer Drehmaschine befestigt werden kann, in radialer Richtung zu verstellen, ist das Verstellglied 11 beispielsweise mit Hilfe eines nicht dargestellten Spannzylinders oder einer Zugstange axial zu bewegen. Durch die an dessen Kolbennasen 12 angeformten Keilflächen 13, die mit den an den Keilstangen 7 angebrachten Gegenflächen 9 zusammenwirken, werden die Keilstangen 7 tangential zur Drehachse A des Spannfutters 1 verstellt und dabei werden, da die Zahnleisten 8 zu deren Verstellrichtung geneigt angeordnet sind, die in diese mit einer Verzahnung 5 eingreifenden Backen 4 mitgenommen.

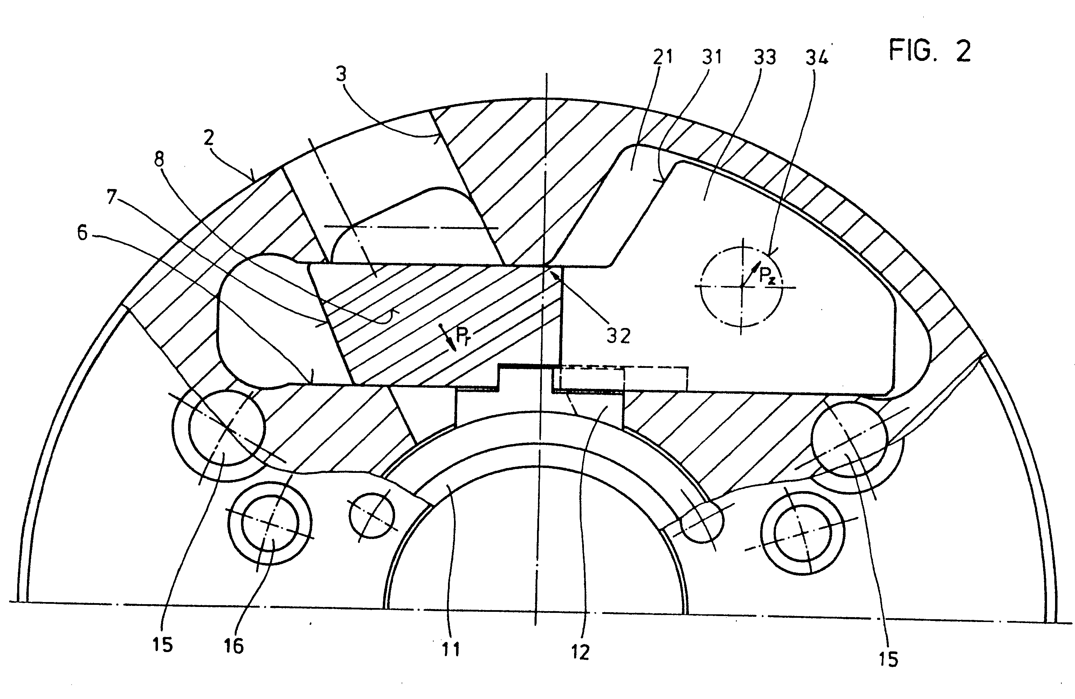

Um die durch die Backen 4 bei Rotation des Kraftspannfutters 1 hervorgerufene Zentrifugalkraft, durch die die von dem Verstellglied 11 eingeleitete, auf das eingespannte Werkstück einwirkende Spannkraft beeinträchtigt wird, auszugleichen, sind die Keilstangen 7 in dem den Zahnleisten 8 gegenüberliegenden Bereich jeweils mit einem Fliehgewicht 31 ausgestattet, das in eine sich an die Aufnahmetaschen 6 anschließende, in den Futterkörper 2 eingearbeitete Freisparung 21 hineinragt, und der Futterkörper 2 ist des weiteren mit einem Kipplager 32 versehen. Das Kipplager 32 ist bei dem Ausführungsbeispiel nach Fig. 2 durch den ausgerundeten Übergang der Freisparung 21 in die Aufnahmetaschen 6 gebildet.

Die Keilstange 7 ist demnach verschwenkbar an dem Futterkörper 2 abgestützt, so daß die von dem mit dieser fest verbundenen Fliehgewicht 31, das als Vorsprung 33 unmittelbar an der Keilstange 7 angeformt ist, hervorgerufene Zentrifugalkraft $P_z$ durch das Kipplager 32 in eine im Bereich der Zahnleisten 8 nach innen gerichtete Kraft $P_r$ wirksam ist. Und da die Backen 4 mit ihrer Verzahnung 5 in die Zahnleisten 8 eingreifen, wird der von diesen hervorgerufenen Zentrifugalkraft somit entgegengewirkt und diese wird bei entsprechender Bemessung des Fliehgewichtes 31 und der Abstände der Kraftresultierenden selbsttätig ausgeglichen. Zur Vergrößerung der Masse des Fliehgewichtes 31 kann dieses, wie es strichpunktiert in Fig. 2 eingezeichnet ist, mit einer Einlage 34 aus Schwermetall, beispielsweise Blei, versehen werden.

Es findet somit ein Fliehkraftausgleich statt, ohne daß die Keilstangen 7 in ihrer Achsrichtung und damit gegenüber dem Verstellglied 11 bewegt werden. Die Keilstangen 7 werden vielmehr lediglich entsprechend dem zwangsläufig in deren Führung vorhandenen Spiel um das Kipplager 32 geschwenkt, eine Erhöhung der statischen Spannkraft tritt demnach, da das Verstellglied 11 auch bei Rotation des Futterkörpers 2 seine Lage beibehält, nicht ein, vielmehr bleibt die durch die Backen 4 auf ein eingespanntes Werkstück zu Beginn eines Spannvorganges ausgeübte Spannkraft während der gesamten Spanndauer konstant.

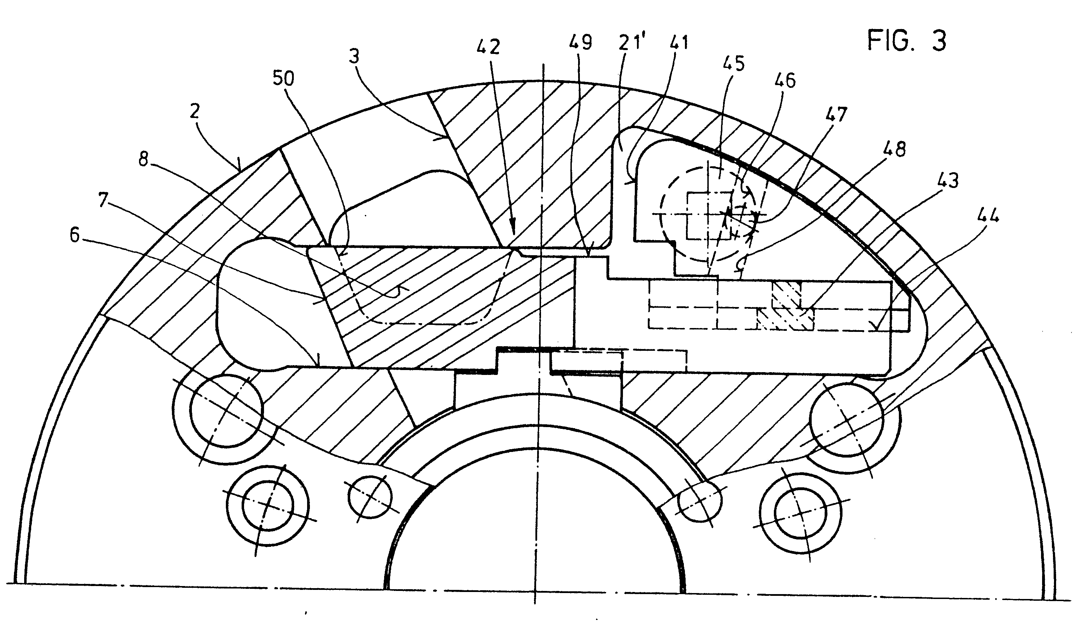

Bei der Ausgestaltung nach Fig. 3 ist das mit 41 bezeichnete in die Freisparung 21' des Futterkörpers 2 ragende Fliehgewicht 41 in Längsrichtung der Keilstange 7 verstellbar an dieser angebracht. Dazu ist in dem der Freisparung 21' zugeordneten Teil der Keilstange 7 eine T-förmig ausgebildete Längsnut 44 eingearbeitet und das Fliehgewicht 41 ist mit einem Ansatz 43 ausgestattet, der in der Längsnut 44 verschiebbar geführt ist. Zur Verstellung und Arretierung des Fliehgewichtes 41 dient hierbei ein in einer Bohrung 46 des Futterkörpers 2 drehbar gelagerter Bolzen 45, der an seiner der Freisparung 21' zugekehrten Stirnseite einen exzentrisch angeordneten Zapfen 47 aufweist, und das Fliehgewicht 41 ist mit einer nach außen gerichteten Mitnahmenut 48 versehen, in die der Zapfen 47 eingreift. Wird der Bolzen 45 durch einen in dessen strichpunktiert eingezeichnete Ausnehmung einzusetzendes Werkzeug verdreht, so wird über den Zapfen 47 das Fliehgewicht 41 mehr oder weniger in Längsrichtung der Keilstange 7 verschoben.

Auf diese Weise kann der Abstand des Fliehgewichtes 41 zu dem Kipplager 42, das hierbei durch eine in die Keilstange 7 eingearbeitete Aussparung 49 gebildet ist, und somit das von dessen Zentrifugalkraft erzeugte Moment verändert werden. Außerdem kann in die Keilstange 7 im Bereich der Zahnleisten 8 in diese, wie es strichpunktiert eingezeichnet ist, eine Freisparung 50 eingearbeitet werden, um deren Masse und somit die von diesem Teil der Keilstange 7 hervorgerufene Zentrifugalkraft zu verringern.

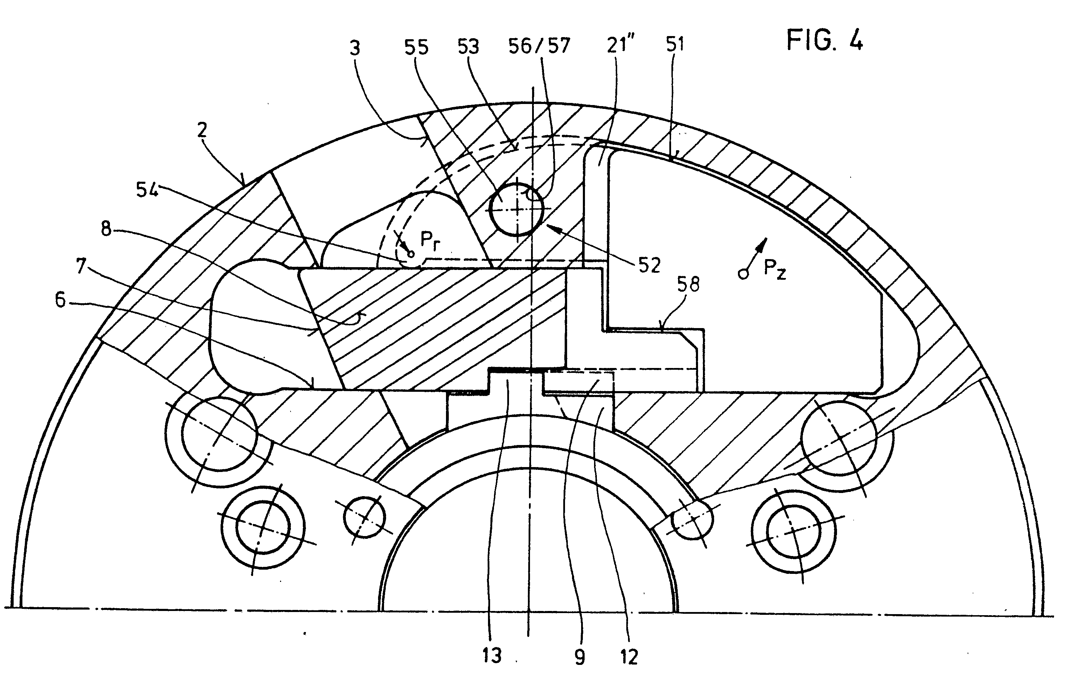

Gemäß Fig. 4 ist das in der Freisparung 21" angeordnete Fliehgewicht 51 kippbar gelagert und im Bereich der Zahnleisten 8 der Keilstange 7 an dieser abgestützt. Um dies zu bewerkstelligen, ist an dem Fliehgewicht 51 ein abgesetzter Ansatz 53 angeformt und in dem Futterkörper 2 ist in einer Bohrung 56 als Kipplager 52 ein Bolzen 55 gelagert, der in eine Bohrung 57 des Ansatzes 53 eingreift. Mit einer Nase 54 ist der Ansatz 53 auf der Keilstange 7 abgestützt. Das Fliehgewicht 51 ist somit einseitig verschwenkbar gelagert. Und da die Keilstange 7 an dem in die Freisparung 21" ragenden Ende mit einem Ansatz 58 versehen ist, kann das Fliehgewicht 51 in seiner Größe groß gewählt werden.

Die von dem Fliehgewicht 51, das, wie auch die Fliehgewichte 31 und 41 nach den Fig. 2 und 3 in den Freisparungen 21" bzw. 21 und 21' radial nicht geführt sind, sondern sich entsprechend den Toleranzen in den Aufnahmetaschen 6 bei Rotation des Futterkörpers 2 geringfügig nach außen verstellen können, hervorgerufene Zentrifugalkraft $P_z$ wird somit über das Kipplager 52 auf die Keilstange 7 im Bereich der Zahnleisten 8 übertragen. Der durch die Backen 4 hervorgerufenen Zentrifugalkraft wird auf diese Weise wirksam entgegengewirkt, so daß diese Kraft ausgeglichen wird und auf das Werkstück stets die durch das Verstellglied 11 eingeleitete Spannkraft einwirkt.

Um einer Verformung des Futterkörpers 2 entgegenzuwirken, ist der Deckel 10 mit einem Bund 17 versehen, an dessen zylindrischer Fläche 18 der Futterkörper 2 rundum und somit auch im Bereich der Kipplager 32, 42 bzw. 52 abgestützt ist. Anstelle des Bundes 17 kann auch, wie dies durch die strichpunktiert eingezeichnete Mittellinie dargestellt sein soll, in den Deckel 10 im Bereich der Kipplager ein Bolzen eingesetzt werden, an dem sich der Futterkörper 2 abstützen kann.

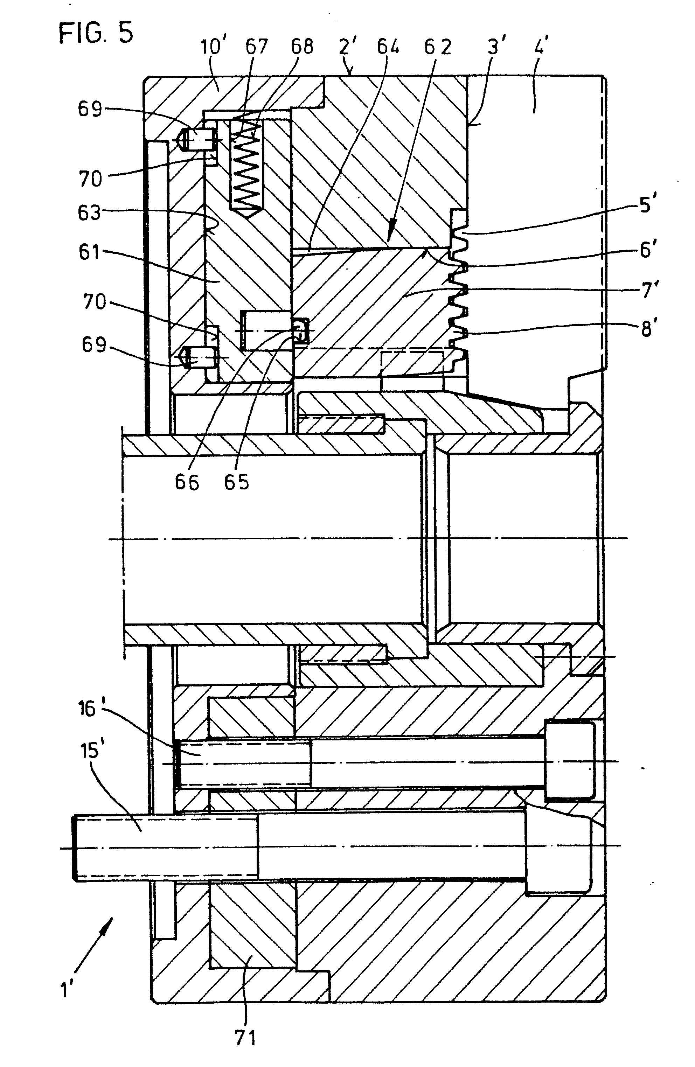

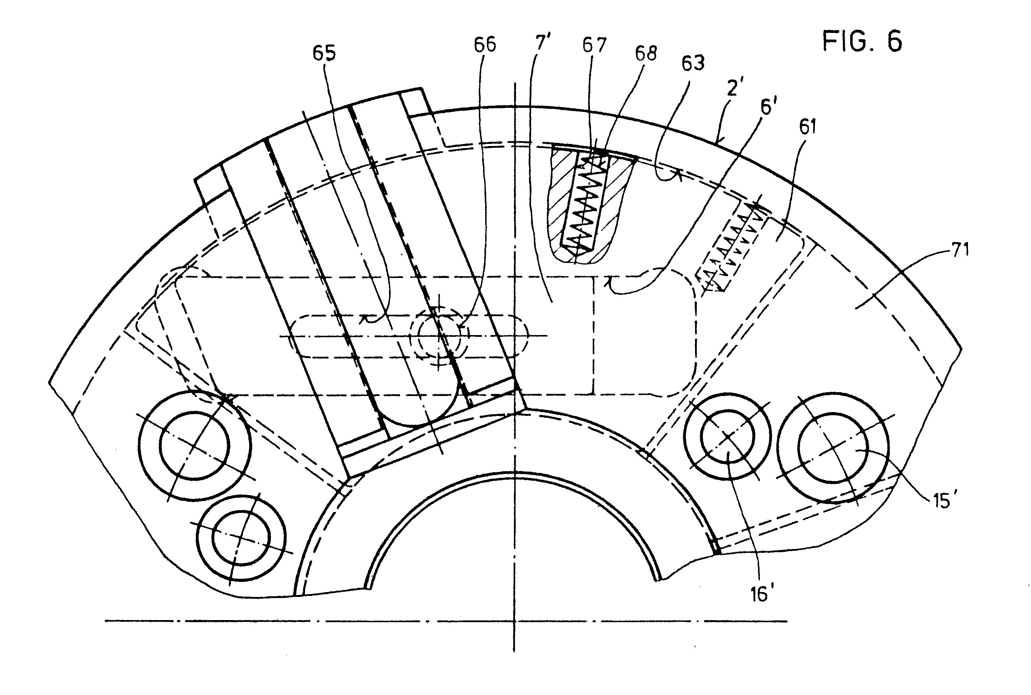

Das in den Fig. 5 und 6 dargestellte und mit 1' bezeichnete Kraftspannfutter weist ebenfalls in einem Futterkörper 2' in radial gerichteten Nuten 3' geführte Spann- oder Grundbacken 4' auf, die mittels tangential zur Drehachse verstellbarer in Aufnahmetaschen 6' angeordneter Keilstangen 7', die mit Zahnleisten 8' in die an den Backen 4' angebrachte Verzahnung 5' eingreifen, betätigbar sind.

Zum Ausgleich der von den Backen 4' hervorgerufenen Zentrifugalkraft dienen wiederum Fliehgewichte 61, die in einer in den mittels Schrauben 16' mit dem Futterkörper 2' fest verbundenen Abschlußdeckel 10' eingearbeiteten Freisparungen 63 angeordnet sind. Außerdem ist jeweils ein Kipplager 62 vorgesehen, mittels dem die bei Rotation des Kraftspannfutters 1' auftretenden, nach außen gerichteten Zentrifugalkräfte der Fliehgewichte 61 durch eine im Bereich der Backen 4' nach innen gerichtete Komponente umgelenkt werden. Die Kipplager 62 sind hierbei jeweils durch eine in die nach außen gerichtete Fläche der Keilstangen 7' eingearbeitete, sich in Achsrichtung erstreckende und keilförmig ausgebildete Aussparung 64 gebildet.

In gleicher Weise kann aber auch in die nach innen gerichtete Fläche der Aufnahmetaste 6' ein Kipplager angearbeitet werden.

Die den Keilstangen 7' zugeordneten Fliehgewichte 61 sind als Ringsegmente ausgebildet und mit geringem radialem Spiel in die in den Abschlußdeckel 10' eingearbeitete, als Ringnut ausgebildete Freisparung 63, die somit leicht herstellbar ist, eingesetzt. In Umfangsrichtung sind zwischen den Fliehgewichten 61 ringsegmentartige Distanzstücke 71 angeordnet, die durch die Schrauben 16' zwischen dem Futterkörper 2' und dem Abschlußdeckel 10' eingespannt sind. Über von den Fliehgewichten 61 in Achsrichtung abstehender Bolzen 66, die in Nuten 65 der Keilstangen 7' eingreifen, sind diese Teile zwangläufig miteinander verbunden. Außerdem sind die Fliehgewichte 61 mittels weiterer in radial gerichteter Nuten 70 geführter Bolzen 69 gegen Verdrehung gesichert und durch in radialen Bohrungen 67 eingesetzter sich an dem Abschlußdeckel 10' abstützender Druckfedern 68 werden die Fliehgewichte 61 jeweils in die Ausgangslage zurückgedrückt.

## Patentansprüche

1. Kraftbetätigtes Spannfutter für Drehmaschinen mit radial verstellbaren Grund- oder Spannbacken, die mittels im Futterkörper tangential zu dessen Drehachse in Aufnahmetaschen geführter Keilstangen antreibbar sind, wobei die Keilstangen gemeinsam durch ein axial verschiebbares über Keilflächen oder dgl. mit diesen zusammenwirkendes Verstellglied betätigbar sind und mit Zahnleisten in eine Verzahnung der Backen eingreifen, dadurch gekennzeichnet, daß den Aufnahmetaschen (6; 6') der Keilstangen (7; 7') jeweils eine in den Futterkörper (2; 2') oder einem mit diesem verbundenen Abschlußdeckel (10') eingearbeitete Freisparung (21, 21', 21"; 63) zugeordnet ist, daß die Keilstangen (7; 7') mit einem in die Freisparung (21, 21', 21"; 63) ragenden in radialer Richtung freiliegendem Fliehgewicht (31; 41; 51; 61) versehen sind und daß der Futterkörper (2; 2') und/oder die Keilstangen (7') jeweils ein Kipplager (32; 42; 52; 62) aufweisen, an denen die Keilstangen (7; 7') oder die Fliehgewichte (51) abgestützt sind und mittels denen die bei Rotation des Futterkörpers (2; 2') auftretende Zentrifugalkraft (P$_z$) eines Fliehgewichtes in eine auf die zugeordnete Keilstange (7; 7') im Bereich der Zahnleisten (8; 8') radial nach innen gerichtete Kraft (P$_r$) umlenkbar ist.

2. Kraftbetätigtes Spannfutter nach Anspruch 1, dadurch gekennzeichnet, daß die Freisparungen (21, 21', 21'') sich jeweils etwa über die Hälfte der axialen Länge der Aufnahmetaschen (6) der Keilstangen (7) erstrecken.

3. Kraftbetätigtes Spannfutter nach Anspruch 1 oder 2, dadurch gekennzeichnet, daß die Außenkontur der Freisparungen (21, 21', 21'') der Außenmantelfläche des Futterkörpers (2) angepaßt, vorzugsweise parallel zu dieser verlaufend ausgebildet ist.

4. Kraftbetätigtes Spannfutter nach einem oder mehreren der Ansprüche 1 bis 3, dadurch gekennzeichnet, daß das Fliehgewicht (31) unmittelbar an eine Keilstange (7) als radial nach außen gerichteter Vorsprung (33) angeformt ist.

5. Kraftbetätigtes Spannfutter nach einem oder mehreren der Ansprüche 1 bis 3, dadurch gekennzeichnet, daß das Fliehgewicht (41) in Achsrichtung der Keilstange (7) verstellbar mit dieser verbunden ist.

6. Kraftbetätigtes Spannfutter nach Anspruch 5, dadurch gekennzeichnet, daß zur verstellbaren Halterung des Fliehgewichtes (41) dieses mittels eines angeformten Steges (43) in einer in die Keilstange (7) eingearbeiteten, beispielsweise T-förmig ausgebildeten Längsnut (44) geführt ist.

7. Kraftbetätigtes Spannfutter nach Anspruch 5 oder 6, dadurch gekennzeichnet, daß zur Verstellung des Fliehgewichtes (41) im Futterkörper (2) ein sich parallel zu dessen Drehachse (A) erstreckender Bolzen (45) drehbar gelagert ist, der auf seiner der Freisparung (21') zugekehrten Stirnfläche einen in diese ragenden exzentrisch angeordneten Zapfen (47) aufweist, der in eine in das Fliehgewicht (41) eingearbeitete nach außen gerichtete Mitnahmenut (48) eingreift.

8. Kraftbetätigtes Spannfutter nach einem oder mehreren der Ansprüche 5 bis 7, dadurch gekennzeichnet, daß die Keilstangen (7) im Bereich der das Fliehgewicht (41) aufnehmenden Längsnut (44) abgestuft ausgebildet sind.

9. Kraftbetätigtes Spannfutter nach einem oder mehreren der Ansprüche 1 bis 8, dadurch gekennzeichnet, daß das den Keilstangen (7) jeweils zugeordnete Kipplager (32) durch den vorzugsweise abgerundeten Übergang der Freisparung (21) in die Aufnahmetasche (6) gebildet ist.

10. Kraftbetätigtes Spannfutter nach einem oder mehreren der Ansprüche 1 bis 8, dadurch gekennzeichnet, daß das Kipplager (42) durch eine in die Keilstange (7) eingearbeitete, zu der das Fliehgewicht (41) aufnehmenden Freisparung (21') hin offenen und in die Aufnahmetasche (6) ragenden Aussparung (49) gebildet ist.

11. Kraftbetätigtes Spannfutter nach Anspruch 9 oder 10, dadurch gekennzeichnet, daß das Kipplager (32; 42) einer Keilstange (7) in einem durch die Breite der zugeordneten Kolbennase (12) des Verstellgliedes (11) bestimmten Bereich, vorzugsweise mittig zu dieser angeordnet ist.

12. Kraftbetätigtes Spannfutter nach einem oder mehreren der Ansprüche 1 bis 8, dadurch gekennzeichnet, daß das Fliehgewicht (51) einen sich in Richtung der Keilstange (7) erstreckenden, vorzugsweise abgesetzten Ansatz (53) aufweist, mittels dem dieses einseitig auf einem im Futterkörper (2) parallel zu dessen Drehachse (A) gehaltenen Bolzen (55) als Kipplager (52) schwenkbar gelagert und an der Keilstange (7) im Bereich der Zahnleisten (8) vorzugsweise über eine Nase (54) an dieser abgestützt ist.

13. Kraftbetätigtes Spannfutter nach Anspruch 12, dadurch gekennzeichnet, daß der Bolzen (55) in einem durch die Breite der zugeordneten Kolbennase (12) des Verstellgliedes (11) bestimmten Bereich, vorzugsweise mittig zu dieser in dem Futterkörper (2) eingesetzt ist.

14. Kraftbetätigtes Spannfutter nach Anspruch 12 oder 13, dadurch gekennzeichnet, daß die Keilstange (7) an dem dem Fliehgewicht (51) zugekehrten Ende stufenförmig (Absatz 58) ausgebildet ist.

15. Kraftbetätigtes Spannfutter nach einem oder mehreren der Ansprüche 1 bis 14, dadurch gekennzeichnet, daß die Keilstangen (7) in dem dem zugeordneten Fliehgewicht (41) gegenüberliegenden Bereich mit einer oder mehreren Freisparungen (50) versehen sind.

16. Kraftbetätigtes Spannfutter nach einem oder mehreren der Ansprüche 1 bis 15, dadurch gekennzeichnet, daß die Verzahnung (5) der in die Zahnleisten (8) der Keilstangen (7) eingreifender Backen (4) in dem dem Kipplager (32; 42; 52) abgewandten Bereich, vorzugsweise bis zur Backenmitte, freigespart ist.

17. Kraftbetätigtes Spannfutter nach einem oder mehreren der Ansprüche 1 bis 16, dadurch gekennzeichnet, daß bei einem Kraftspannfutter (1) mit einem auf der Rückseite durch einen Deckel (10) verschließbaren Futterkörper (2) dieser im Bereich der Kipplager (32) durch einen an dem Deckel (10) angeformten Bund (17), durch in den Deckel (10) eingesetzte Bolzen (19), durch Schrauben oder dgl. in radialer Richtung abgestützt ist.

18. Kraftbetätigtes Spannfutter nach Anspruch 1, dadurch gekennzeichnet, daß die die Fliehgewichte (61) aufnehmenden Freisparungen (63) auf der den Zahnleisten (8') der Keilstangen (7') gegenüberliegenden Seite in den Futterkörper (2') und/oder den Abschlußdeckel (10') eingearbeitet sind.

19. Kraftbetätigtes Spannfutter nach Anspruch 1 oder 18, dadurch gekennzeichnet, daß die Kipplager (62) jeweils durch eine an der nach außen gerichteten Fläche einer Keilstange (7') und/oder an der nach innen gerichteten Fläche einer Aufnahmetasche (6') angearbeiteten sich in Achsrichtung des Futterkörpers (2') erstrekkenden, vorzugsweise keilförmig ausgebildete Aussparung (64) gebildet sind.

20. Kraftbetätigtes Spannfutter nach Anspruch 1, 18 oder 19, dadurch gekennzeichnet, daß die Fliehgewichte (61) als Ringsegmente ausgebildet sind, die mit radialem Spiel in die Freisparung (63) eingesetzt und über einen in eine Nut (65) eingreifenden Ansatz, z. B. in Form eines Bolzens (66), an der den Zahnleisten (8') gegenüberliegenden Seite mit den Keilstangen (7') verbunden sind.

21. Kraftbetätigtes Spannfutter nach Anspruch 20, dadurch gekennzeichnet, daß die Fliehgewichte (61) in radialer Richtung federnd, beispielsweise durch in diese eingesetzte und sich an dem Abschlußdeckel (10') abstützenden Druckfedern (68) gehalten sind.

22. Kraftbetätigtes Spannfutter nach Anspruch 20 oder 21, dadurch gekennzeichnet, daß die Fliehgewichte (61) verdrehfest, beispielsweise mittels eines oder mehrerer achsparallel angeordneter und in diese oder den Futterkörper oder den Abschlußdeckel (10') eingesetzter, mit ihrem freien Ende in radial gerichteten Nuten (70) eingreifender Führungsbolzen (69) gehalten sind.

23. Kraftbetätigtes Spannfutter nach einem oder mehreren der Ansprüche 1 oder 18 bis 22, dadurch gekennzeichnet, daß die die Fliehgewichte (61) aufnehmenden Freisparungen (63) als in den Abschlußdeckel (10') eingearbeitete Ringnut ausgebildet ist und daß in Umfangsrichtung zwischen den einzelnen Fliehgewichten (61) ringsegmentartige Distanzstücke (71) angeordnet sind.

24. Kraftbetätigtes Spannfutter nach einem oder mehreren der Ansprüche 1 bis 23, dadurch gekennzeichnet, daß das Fliehgewicht (31; 61) mit einer Einlage (34) aus Schwermetall versehen ist.

25. Kraftbetätigtes Spannfutter nach einem oder mehreren der Ansprüche 1 bis 24, dadurch gekennzeichnet, daß das Fliehgewicht (31; 41; 51; 61) in seiner Masse und die Abstände der Kraftresultierenden ($P_z$, $P_r$) zu dem Kipplager (32; 42; 52; 62) derart bemessen sind, daß in einem bestimmten Drehzahlbereich des Spannfutters (1; 1') die von einem Backen (4; 4') hervorgerufene Zentrifugalkraft der von der Zentrifugalkraft ($P_z$) des Fliehgewichtes (31; 41; 51; 61) auf die Keilstange (7; 7') im Bereich der Zahnleisten (8; 8') ausgeübten Kraft ($P_r$) entspricht.

## Claims

1. Power operated chuck for lathes with radially adjustable basic or gripping jaws drivable by wedge rods guided in bushings of the jaw body tangentially with its axis of rotation, whereby the wedge rods are commonly operable by an adjustment device axially shiftable and cooperating with the wedge rods via wedge surfaces or the like and whereby the wedge rods mesh by means of tooth ledges with a toothing of the jaws, characterized in that an opening (21, 21', 21''; 63) located in the jaw body (2; 2') or an end cover (10') connected therewith is adjoined to each of the bushings (6; 6') of the wedge rods (7; 7') that a centrifugal body (31; 41; 51; 61) projecting into the opening (21, 21', 21''; 63) and radially free supported is provided for the wedge rods (7; 7') and that the jaw body (2; 2') and/or the wedge rods (7') respectively have a rocker bearing (32; 42; 52; 62) to which the wedge rods (7; 7') or the centrifugal bodies (51) are rested on and by means of which rocker bearings a centrifugal body's centrifugal power ($P_z$) occuring when the jaw body (2; 2') rotates is turnable back into a power ($P_r$) direted radially inwardly to the respective wedge rod (7; 7') in the tooth ledges' (8; 8') area.

2. Power operated chuck of claim 1, characterized in that the openings (21, 21', 21'') extend over about the half of the axial length of the bushings (6) of the wedge rods (7) respectively.

3. Power operated chuck of claim 1 or 2, characterized in that the outline of the openings (21, 21', 21'') is adapted to the surface of the jaw body's (2) outer cover, preferably parallel oriented to said surface.

4. Power operated chuck of one or more of the claims 1 through 3, characterized in that the centrifugal body (31) is designed as a wedge rod's projection (33) directed radially outwardly therefrom.

5. Power operated chuck of one or more of the claims 1 through 3, characterized in that the centrifugal body (41) is adjustable connected to the wedge rod (7).

6. Power operated chuck of claim 5, characterized in that for the purpose of adjustable supporting the centrifugal body (41) same is guided in a preferably T-shaped longitudinal groove (44) in the wedge rod (7) by means of a flange (43) being part of the centrifugal body.

7. Power operated chuck of claim 5 or 6, characterized in that for the purpose of adjustment of the centrifugal body (41) a bolt (45) oriented parallel to the jaw body's (2) axis of rotation (A) is pivoted in the jaw body, having an excentrically located extension (47) at its surface directed to the opening (21'), extending to the surface and meshing to a groove (48) located in the centrifugal body (41) and directed outwardly.

8. Power operated chuck of one or more of the claims 5 through 7, characterized in that the wedge rods (7) are formed in steps in the area of the longitudinal groove (44) embodying the centrifugal body.

9. Power operated chuck of one or more of the claims 1 through 8, characterized in that the rocker bearing (32) adjoined to the wedge rods (7) is formed by the preferably rounded transition from the opening (21) to the bushings (6).

10. Power operated chuck of one or more of the claims 1 through 8, characterized in that the rocker bearing (42) is shaped by an opening (49) extending into the bushing (6), located in the wedge rod (7) and open towards the opening (21') embodying the centrifugal body (41).

11. Power operated chuck of claim 9 or 10, characterized in that the rocker bearing (32; 42) of a wedge rod (7) is located, preferably concentrically, in an area defined by the wideness of the respective piston lug (12) of the adjustment piece (11).

12. Power operated chuck of one or more of the claims 1 through 8, characterized in that the centrifugal body (51) has a preferably stepped joining piece (53) extending in the direction of the wedge rod (7), by means of which joining piece the centrifugal body is pivoted in the jaw body (2) at one side on a bolt (55) parallel to the axis of rotation (A) and preferably by means of a lug (54) supported at the wedge rod (7) in the area of the tooth ledges (8).

13. Power operated chuck of claim 12, characterized in that the bolt (55) is preferably concentrically to a piston lug (12) inserted into the jaw body (2) in an area defined by the widness of the respective piston lug (12) of the adjustment piece (11).

14. Power operated chuck of claim 12 or 13, characterized in that the wedge rod (7) is stepped (step 58) at the end directed to the centrifugal body (51).

15. Power operated chuck of one or more of the claims 1 through 14, characterized in that the wedge rods (7) located in the area opposite to the respective centrifugal body (41) are provided with one or two openings (50).

16. Power operated chuck of one or more of the claims 1 through 15, characterized in that the toothing (5) of the jaws (4) meshing into the tooth ledges (8) of the wedge rods (7) has no teeth in the area turned away from the rocker bearing (32; 42; 52), preferably in the middle of the jaws.

17. Power operated chuck of one or more of the claims 1 through 16, characterized in that at a power operated chuck (1) with a jaw body (2) closable at its rear side by a cover (10), the jaw body in the area of the rocker bearing (32) is radially supported by means of a collar being part of the cover, by means of bolts (19), by means of screws or the like.

18. Power operated chuck of claim 1, characterized in that the openings (63) embodying the centrifugal bodies (61) are inserted into the jaw body (2') and/or into the end cover (10') at the side opposite to the tooth ledges (8') of the wedge rods (7').

19. Power operated chuck of claim 1 or 18, characterized in that the rocker bearings (62) are formed by an opening (64) located at a wedge rod's (7') surface outwardly directed and/or a bushing's (6') surface inwardly directed and extending along the axis of the jaw body (2') and preferably wedge shaped.

20. Power operated chuck of claim 1, 18 or 19, characterized in that the centrifugal bodies (61) are shaped as ring segments inserted with radial clearance into the opening (63) and are connected to the wedge rods (7') at the side opposite to the tooth ledges (8') by means of a lug extending into a groove (65), for example as a bolt (66).

21. Power operated chuck of claim 20, characterized in that the centrifugal bodies (61) are resiliently mounted, for example by pressure springs (68) inserted into the centrifugal bodies and supported by the end cover (10').

22. Power operated chuck of claim 20 or 21, characterized in that the centrifugal bodies (61) are untorsionally mounted, for example by means of one or more guiding bolts (69) in the axle or the jaw body or the end cover (10') which bolts are oriented parallel to the axis with their free ends meshing into radially extending grooves (70).

23. Power operated chuck of one or more of the claims 1 or 18 through 22, characterized in that the openings embodying the centrifugal bodies (61) are shaped as a ring groove in the end cover (10') and that along the periphery between the respective centrifugal bodies (61) ring segment shaped space pieces (71) are located.

24. Power operated chuck of one or more of the claims 1 through 23, characterized in that the centrifugal body (31; 61) is provided with an insert (34) of heavy metal.

25. Power operated chuck of one or more of the claims 1 through 24, characterized in that the mass of the centrifugal body (31; 41; 51; 61) and the distances of the resultant power line ($P_z$, $P_r$) to the rocker bearing (32; 42; 52; 62) are dimensioned in that way that the centrifugal power of one of the jaws (4; 4') in a certain range of torsional speed of the chuck (1, 1') corresponds to the power ($P_r$) created by the centrifugal power ($P_z$) of the centrifugal weight (31; 41; 51; 61) acting against the wedge rod (7; 7') in the area of the tooth ledges (8; 8').

## Revendications

1. Mandrin de serrage à actionnement mécanique externe pour tours, avec mors d'appui ou de serrage à réglage radial qui peuvent être actionnés par des barres en coins se déplaçant dans des encoches de positionnement pratiquées dans le mandrin, tangentiellement à son axe de rotation, les barres en coin pouvant être actionnées ensemble par un élément de réglage à déplacement axial agissant simultanément sur celles-ci par l'intermédiaire de portées en coin ou similaires et engrénant, grâce à une crémaillère, dans une denture pratiquée dans les mors, caractérisé par le fait que, à chacune des encoches de positionnement (6; 6') des barres en coin (7; 7') correspond un évidement (21, 21', 21''; 63) usiné dans le corps de mandrin (2, 2') ou dans le couvercle de fermeture (10') qui lui est solidaire, que les barres en coin (7, 7') sont équipées de masselottes (31; 41; 51; 61) se déplaçant librement en direction radiale dans les évidements (21, 21', 21''; 63) et que le corps de mandrin (2, 2') et/ou les barres en coin (7') présentent à chaque fois un palier à bascule (32; 42; 52; 62), sur lesquels s'appuient les barres en coin (7; 7') ou les masselottes (51) et grâce auxquels la force centrifuge ($P_z$) des chaque masselotte résultant de la rotation du mandrin (2; 2') peut être changée en une force centripète radiale ($P_r$) agissant sur la barre en coin correspondante (7; 7') au niveau des crémaillères (8; 8').

2. Mandrin de serrage à actionnement mécanique externe selon revendication 1, caractérisé par le fait que, les évidements (21, 21', 21") s'étendent chaque fois sur environ la moitié de la longueur axiale des encoches de positionnement (6) des barres en coin (7).

3. Mandrin de serrage à actionnement mécanique externe selon revendication 1 ou 2, caractérisé par le fait que, le contor extérieur des évidements (21, 21', 21") est adapté au profil de la surface extérieure du corps de mandrin (2), de préférence tel qu'il lui soit parallèle.

4. Mandrin de serrage à actionnement mécanique externe selon l'une ou plusieurs des revendications 1 à 3, caractérisé par le fait que, la partie de la masselotte (31) placée au voisinage de la barre en coin (7) a la forme d'une saillie radiale (33) dirigée vers l'extérieur.

5. Mandrin de serrage à actionnement mécanique externe selon l'une ou plusieurs des revendications 1 à 3, caractérisé par le fait que, la masselotte (41) peut se déplacer dans l'axe de la barre en coin (7) et est fixée à cette dernière.

6. Mandrin de serrage à actionnement mécanique externe selon revendication 5, caractérisé par le fait que, afin d'assurer la fixation de la masselotte (41) tout en permettant son déplacement, celle-ci est guidée au moyen d'une réglette (43) coulissant dans une rainure longitudinale (44), par exemple en forme de T, usinée dans la barre en coin (7).

7. Mandrin de serrage à actionnement mécanique externe selon revendication 5 ou 6, caractérisé par le fait que, afin de permettre le déplacement de la masselotte (41) dans le corps de mandrin (2), un goujon (45) pouvant pivoter sur son axe est placé parallèlement à l'axe de rotation (A) du mandrin, ce goujon portant sur son côté tourné vers l'évidement (21') un tenon (47) excentrique qui en dépasse et qui s'enclenche dans une rainure d'entraînement (48) usinée dans la masselotte (41) et dirigée vers l'extérieur.

8. Mandrin de serrage à actionnement mécanique externe selon l'une ou plusieurs des revendications 5 à 7, caractérisé par le fait que, les barres en coin (7) présentent un échelonnement au niveau de la rainure longitudinale (44) servant de positionnement à la masselotte (41).

9. Mandrin de serrage à actionnement mécanique externe selon l'une ou plusieurs des revendications 1 à 8, caractérisé par le fait que, le palier à bascule (32) correspondant à chacune des barres en coin (7) est constitué par la surface de raccord, de préférence arrondie, entre l'évidement (21) et l'encoche de positionnement (6).

10. Mandrin de serrage à actionnement mécanique externe selon l'une ou plusieurs des revendications 1 à 8, caractérisé par le fait que, le palier à bascule (42) est constitué par un espace (49) évidé dans la barre en coin (7), ouvert du côté de l'évidement (21') servant de logement à la masselotte (41) et s'enfilant dans l'encoche de positionnement (6).

11. Mandrin de serrage à actionnement mécanique externe selon revendication 9 ou 10, caractérisé par le fait que, le palier à bascule (32; 42) relatif à une barre en coin (7) donnée est positionné de préférence en son milieu, dans une zone déterminée par la largeur du nez de piston (12) de l'élément de réglage (11) correspondant.

12. Mandrin de serrage à actionnement mécanique externe selon l'une ou plusieurs des revendications 1 à 8, caractérisé par le fait que, la masselotte (51) présente un épaulement (53), de préférence en retrait, s'étendant en direction de la barre en coin (7) lui permettant d'une part un appui unilatéral pivotant sur un axe (55) fixé dans le corps de mandrin (2) parallèlement à son axe de rotation (A) servant de palier à bascule (52) et d'autre part un appui sur la barre en coin (7) au niveau de la crémaillère (8), de préférence par l'intermédiaire d'une protubérance (54).

13. Mandrin de serrage à actionnement mécanique externe selon revendication 12, caractérisé par le fait que, l'axe (55) est logé dans le corps de mandrin (2), de préférence au milieu de la zone déterminée par la largeur du nez de piston (12) de l'élément de réglage (11) correspondant.

14. Mandrin de serrage à actionnement mécanique externe selon revendication 12 ou 13, caractérisé par le fait que, l'extrémité de la barre en coin (7) du côté de la masselotte (51) est en forme d'échelon (gradin 58).

15. Mandrin de serrage à actionnement mécanique externe selon l'une ou plusieurs des revendications 1 à 14, caractérisé par le fait que, les barres en coin (7) présentent un ou plusieurs évidements (50) dans la zone opposée à la masselotte correspondante (41).

16. Mandrin de serrage à actionnement mécanique externe selon l'une ou plusieurs des revendications 1 à 15, caractérisé par le fait que, la denture (5) des mors (4) engrènant dans les crémaillères (8) des barres en coin (7) est aplanie dans la zone opposée au palier à bascule (32; 42; 52), de préférence jusqu'à la moitié du mors.

17. Mandrin de serrage à actionnement mécanique externe selon l'une ou plusieurs des revendications 1 à 16, caractérisé par le fait que, dans un mandrin de serrage (1) comportant sur sa face arrière un couvercle de fermeture (10) du corps de mandrin (2), ce dernier s'appuie en direction radiale sur un épaulement (17) ménagé sur le couvercle (10), avec des goujons (19) logés dans le couvercle (10) et des vis ou un système similaire.

18. Mandrin de serrage à actionnement mécanique externe selon revendication 1, caractérisé par le fait que, les évidements (63) servant de logement aux masselottes (61) sont incorporés au corps de mandrin (2') et/ou au couvercle de fermeture (10'), du côté opposé aux crémaillères (8') des barres en coin (7').

19. Mandrin de serrage à actionnement mécanique externe selon revendication 1 ou 18, caractérisé par le fait que, les paliers à bascule (62) sont formés à chaque fois par un espacement (64), de préférence en forme de coin, ménagé sur la surface tournée vers l'extérieur d'une barre en coin (7') et/ou sur la surface tournée vers l'intérieur d'une encoche de positionnement (6') et dirigée selon l'axe du corps de mandrin (2).

20. Mandrin de serrage à actionnement mécanique externe selon revendication 1, 18, ou 19, caractérisé par le fait que, les masselottes (61) ont la forme de segments annulaires qui sont montés avec un jeu radial dans l'évidement (63) et qui sont reliés au côté opposé à la crémaillère (8') des barres en coin (7') par une saillie, par exemple constituée par une cheville (66), s'engageant dans une rainure (65).

21. Mandrin de serrage à actionnement mécanique externe selon revendication 20, caractérisé par le fait que, les masselottes (61) disposent d'une fixation élastique en direction radiale, par exemple grâce à des ressorts de pression (68) qui y sont logés et s'appuient sur le couvercle de fermeture (10').

22. Mandrin de serrage à actionnement mécanique externe selon revendication 20 ou 21, caractérisé par le fait que, les masselottes (61) disposent d'une fixation empêchant leur rotation réalisée au moyen d'un ou plusieurs tétons de guidage (69) fixés parallèlement à l'axe du mandrin dans le corps de mandrin ou dans le couvercle de fermeture (10') et dont l'extrémité libre s'engage dans des rainures radiales (70).

23. Mandrin de serrage à actionnement mécanique externe selon l'une ou plusieurs des revendications 1 ou 18 à 22, caractérisé par le fait que, les évidements (63) servant de logement aux masselottes (61) sont constitués de rainures circulaires usinées dans le couvercle de fermeture (10') et que des éléments intercalaires ayant la forme de segments de couronne (71) sont centrés sur la périphérie entre les différentes masselottes (61).

24. Mandrin de serrage à actionnement mécanique externe selon l'une ou plusieurs des revendications 1 à 23, caractérisé par le fait que, la masselotte (31; 61) est pourvue d'une insertion (34) en métal lourd.

25. Mandrin de serrage à actionnement mécanique externe selon l'une ou plusieurs des revendications 1 à 24, caractérisé par le fait que, la masse de la masselotte (31; 41; 51; 61) ainsi que les distances respectives des résultantes de force ($P_z$, $P_r$) au palier à bascule (32, 42, 52, 62) sont proportionnées de telle sorte, que dans une plage de régimes de rotation déterminée du mandrin de serrage (1; 1'), la force centrifuge générée par un mors (4; 4') corresponde à la force ($P_r$) exercée sur la barre en coin (7; 7') au niveau de la crémaillère (8; 8') par la force centrifuge ($P_z$) de la masselotte (31; 41; 51; 61).

FIG. 1

FIG. 2

FIG. 3

0 083 691

FIG. 4

**FIG. 5**

FIG. 6